# EUROPEAN PATENT SPECIFICATION

(11) **EP 3 086 458 B1**
(45) Date of publication and mention of the grant of the patent: **06.03.2019**
(21) Application number: 14872836.3
(22) Date of filing: 16.12.2014
(51) Int. Cl.: H02M 7/5387, H02M 3/337, H02M 7/493, H02M 1/00

(54) **INVERTER CIRCUIT AND METHOD FOR PRODUCING INVERTER CIRCUIT**
WECHSELRICHTERSCHALTUNG UND VERFAHREN ZUR HERSTELLUNG DER WECHSELRICHTERSCHALTUNG
CIRCUIT ONDULEUR ET SON PROCÉDÉ DE FABRICATION

(30) Priority: 19.12.2013 JP 2013262744
(43) Date of publication of application: 26.10.2016
(73) Proprietor: Panasonic Intellectual Property Management Co., Ltd., Osaka-shi, Osaka 540-6207 (JP)
(72) Inventor: GOTO, Shusaku, Osaka 540-6207 (JP); IWAMATSU, Yusuke, Osaka 540-6207 (JP)
(74) Representative: Appelt, Christian W.
(86) International application number: PCT/JP2014/006246
(87) International publication number: WO 2015/093039

(56) References cited:
- EP-A2- 2 380 070
- JP-A- H1 155 954
- JP-A- H04 251 574
- JP-A- H11 285 274
- JP-A- 2003 250 277
- JP-A- 2009 089 541
- KR-A- 20120 108 123
- US-A- 4 740 881
- US-A1- 2004 264 215
- US-A1- 2013 181 529
- G-H CHO ET AL: "A new current source inverter with simultaneous recovery and commutation", IEEE TRANSACTIONS ON INDUSTRY APPLICATIONS, IEEE SERVICE CENTER, PISCATAWAY, NJ, US, vol. 25, no. 1, 1 January 1989 (1989-01-01), pages 162-171, XP011477835, ISSN: 0093-9994, DOI: 10.1109/28.18886

## Description

### TECHNICAL FIELD

The present invention relates to an inverter circuit that uses a full-bridge circuit and a method for manufacturing an inverter circuit.

### BACKGROUND ART

Studies have been conducted on an interconnection inverter device that converts DC voltage into AC voltage with a full-bridge inverter and outputs the converted voltage to a power system in an interconnected manner (refer to, for example, Patent Document 1). The technique described in Patent Document 1 uses a clamp circuit at an output of the full-bridge inverter. This technique decreases the amplitude of the inverter output and reduces the switching loss of the inverter to increase the power conversion efficiency.

Patent Document 2 describes a power converter circuit that includes output terminals configured to receive an external AC voltage. At least one series circuit has at least two converter units. Each converter unit includes input terminals configured to be coupled to a DC power source. Output terminals provide an AC output current. The at least one series circuit is connected between the output terminals of the power converter circuit. A voltage measurement circuit is connected between the output terminals of the power converter circuit and configured to provide at least one measurement signal that includes information related to phase and frequency of the external AC voltage. At least one of the converter units is configured to receive the at least one measurement signal and is configured to regulate the generation of the AC output current dependent on the at least one measurement signal.

Patent Document 3 describes a power converter that includes a current source providing an input current, a transformer having primary and secondary windings, a switch network coupling the current source and the primary winding, and a clamping circuit coupled to the switch network, An output bus is coupled to the secondary winding and provides an output voltage. A control circuit has inputs based on the output voltage and the input current, and generates switch network control signals based on those inputs. The control circuit also generates clamping circuit control signals based on the switch network control signals. The power converter may also include a start-up control circuit configured to selectively control the switch network and the clamping circuit so as to raise the output voltage to a desired level. The switch network is a full bridge, and the clamping circuit includes first and second clamping switches.

Patent Document 4 describes a photovoltaic system that has an interleaved mode, an active clamp mode and an analogous resonant mode. A resonant circuit of a fly back mode reduces a leakage current in the active clamp mode. The analogous resonant mode reduces the loss of a main switch through ZVS. The photovoltaic inverter divides generated power from a solar cell in the interleaved mode.

Patent Document 5 describes a cell arrangement comprising a plurality of at least partially serially coupled cells each being adapted to provide electric energy and a control entity interconnected between the plurality of cells and being adapted to operate at least a part of the plurality of cells as an electric power source in accordance with present operation conditions so that at least the part of the plurality of cells provides a maximum electric output power achievable under the present operation conditions and so as to be in accordance with a predefined cell operation criteria.

Patent Document 6, which is considered as the closest prior art, and a corresponding scientific publication referred to as Document 7, describe that a simultaneous recovery commutation current source inverter is provided by connecting three AC output terminals of a main inverter and an auxiliary inverter in parallel with each other and to three terminals of an induction motor, providing a high AC impedance DC current source through inductors connected in series to a variable DC electric source so that DC electric power is supplied to both sides of a main DC bus of the main inverter, providing a low AC impedance DC voltage source by supplying DC electric power to both sides of an auxiliary DC bus of the auxiliary inverter through a rectifying circuit from the respective connecting points of the main inverter, auxiliary inverter and the three motor terminals. Snubber circuits may be added to the respective semiconductor elements for safe switching operation.

### PRIOR ART DOCUMENTS

Patent Document 1: Japanese Laid-Open Patent Publication No. 2009-89541.
Patent Document 2: US 2013/0181529 A1.
Patent Document 3: US 2004/264215 A1.
Patent Document 4: KR 2012 0108123 A.
Patent Document 5: EP 2 380 070 A2.
Patent Document 6: US 4 740 881 A.
Document 7: IEEE Transactions on Industry Applications, IEEE Service Center, Piscataway, NJ, US, vol. 25, No. 1, January 1, 1989, pages 162-171.

### SUMMARY OF THE INVENTION

### PROBLEMS THAT ARE TO BE SOLVED BY THE INVENTION

However, dedicated power modules that form a clamp circuit are not distributed as versatile products. Thus, there is a need to use separate power devices (discrete products) to form a clamp circuit. In this case, a plurality of discrete products need to be connected in parallel or in series to form a clamp circuit. Thus, wires may produce loss or noise between devices. Further, variations in the junction temperature may adversely affect the durability.

A dedicated custom module including all of the power devices that are necessary for a clamp circuit may be manufactured. However, the custom module increases the manufacturing costs and the inspection costs as compared with a versatile module.

It is an object of the present invention to provide a low-cost and high-performance inverter circuit that uses a full-bridge module to form a clamp and provide a method for manufacturing the inverter circuit.

### MEANS FOR SOLVING THE PROBLEM

The invention relates to an inverter circuit according to claim 1. The inverter circuit comprises: a first full-bridge circuit module configured to convert DC voltage into AC voltage; and a second full-bridge circuit module configured to clamp an output of the first full-bridge circuit module, wherein output terminals of the first full-bridge circuit module are connected in parallel to output terminals of the second full-bridge circuit module, wherein the output terminals of the second full-bridge circuit module are connected to output terminals of the inverter circuit, wherein:
each of the first and second full-bridge circuit modules includes the same number of switching elements and corresponding rectifying elements, a conduction loss of the switching elements of the second full-bridge circuit module is less than or equal to a conduction loss of the switching elements of the first full-bridge circuit module, a conduction loss of the rectifying elements of the second full-bridge circuit module is less than or equal to a conduction loss of the rectifying elements of the first full-bridge circuit module, a switching speed of the switching elements of the first full-bridge circuit module is higher than or equal to a switching speed of the switching elements of the second full-bridge circuit module, and a switching speed of the rectifying elements of the second full-bridge circuit module is higher than or equal to a switching speed of the rectifying elements of the first full-bridge circuit module.

### EFFECT OF THE INVENTION

The present invention provides a low-cost and high-performance inverter circuit that uses a general-purpose full-bridge module to form a clamp and provides a method for manufacturing the inverter circuit.

### BRIEF DESCRIPTION OF THE DRAWINGS

Fig. 1 is a circuit diagram showing the structure of an inverter circuit of the present embodiment.
Fig. 2 shows a power converter that uses the inverter circuit of Fig. 1.

### EMBODIMENTS OF THE INVENTION

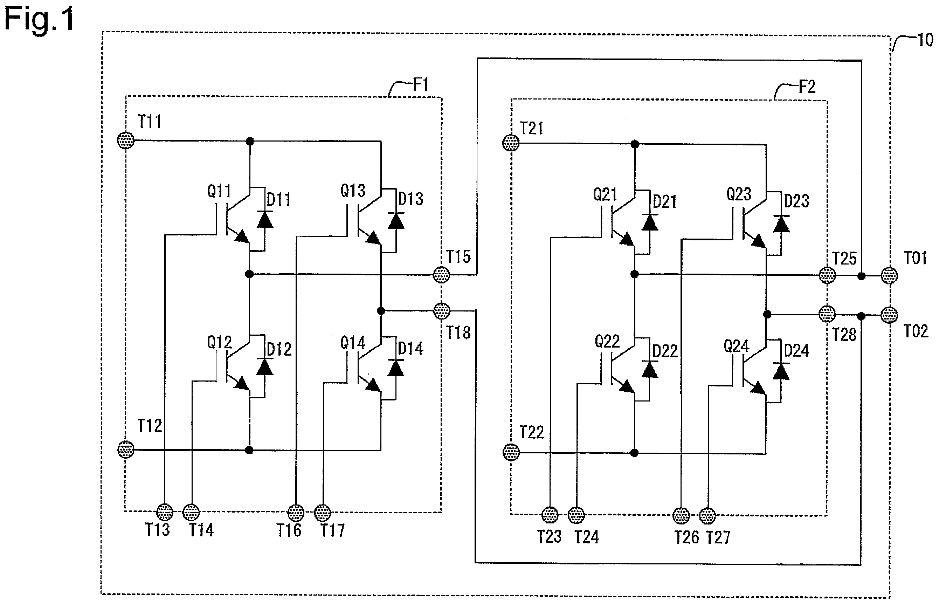

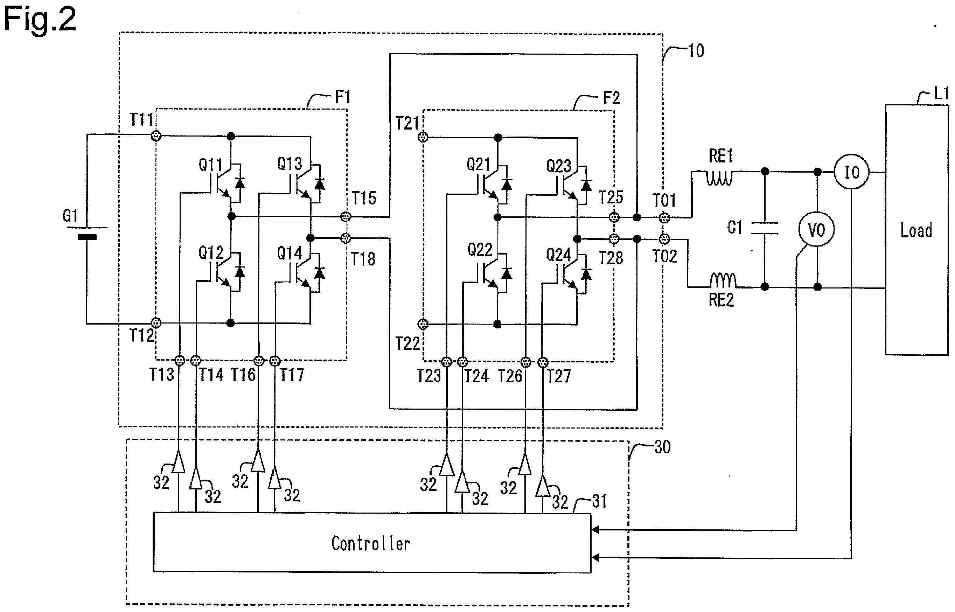

The present embodiment will now be described with reference to Figs. 1 and 2.

### [Structure of Inverter]

Fig. 1 shows the structure of an inverter 10 (inverter circuit) of the present embodiment. The inverter 10 includes two full-bridge circuits F1 and F2. The full-bridge circuit F1, which serves as a first full-bridge circuit module, includes terminals T11 to T18. The full-bridge circuit F2, which serves as a second full-bridge circuit module, includes terminals T21 to T28.

Further, elements (switching elements, diodes, and the like) of the full-bridge circuits F1 and F2 are mounted on a substrate (not shown) and encapsulated in a single package to form a module as a semiconductor device. Electric wires connected to the elements include conductors that are arranged on the substrate.

The full-bridge circuit F1 includes four switching elements Q11 to Q14 and diodes (rectifying elements) D11 to
D14, which are respectively connected to the switching elements Q11 to Q14. In the same manner, the full-bridge circuit F2 includes four switching elements Q21 to Q24 and diodes (rectifying elements) D21 to D24, which are respectively connected to the switching elements Q21 to Q24.

Each of the switching elements Q11 to Q14 and Q21 to Q24 is formed by an insulated gate bipolar transistor (IGBT).

A series circuit of the switching elements Q11 and Q12 and a series circuit of the switching elements Q13 and Q14 of the full-bridge circuit F1 are connected between the terminals T11 and T12. More specifically, the collector of the switching element Q11 is connected to the terminal T11, the emitter of the switching element Q11 and the collector of the switching element Q12 are connected to each other, and the emitter of the switching element Q12 is connected to the terminal T12. Further, the collector of the switching element Q13 is connected to the terminal T11, the emitter of the switching element Q13 and the collector of the switching element Q14 are connected to each other, and the emitter of the switching element Q14 is connected to the terminal T12. The diodes D11 to D14 are connected in anti-parallel to the switching elements Q11 to Q14, respectively.

A connection point between the switching elements Q11 and Q12 and a connection point between the switching elements Q13 and Q14 each function as an output terminal of the full-bridge circuit F1. The connection point between the switching elements Q11 and Q12 and the connection point between the switching elements Q13 and Q14 are respectively connected to the terminals T15 and T18.

The gates of the switching elements Q11 and Q12 are connected to the terminals T13 and T14, respectively. The gates of the switching elements Q13 and Q14 are connected to the terminals T16 and T17, respectively.

A series circuit of the switching elements Q21 and Q22 and a series circuit of the switching elements Q23 and Q24 of the full-bridge circuit F2 are connected between the terminals T21 and T22. More specifically, the collector of the switching element Q21 is connected to the terminal T21, the emitter of the switching element Q21 and the collector of the switching element Q22 are connected to each other, and the emitter of the switching element Q22 is connected to the terminal T22. Further, the collector of the switching element Q23 is connected to the terminal T21, the emitter of the switching element Q23 and the collector of the switching element Q24 are connected to each other, and the emitter of the switching element Q24 is connected to the terminal T22. The diodes D21 to D24 are connected in anti-parallel to the switching elements Q21 to Q24, respectively.

A connection point between the switching elements Q21 and Q22 and a connection point between the switching elements Q23 and Q24 each function as an output terminal of the full-bridge circuit F2. The connection point between the switching elements Q21 and Q22 and the connection point between the switching elements Q23 and Q24 are respectively connected to the terminals T25 and T28.

The gates of the switching elements Q21 and Q22 are connected to the terminals T23 and T24, respectively. The gates of the switching elements Q23 and Q24 are connected to the terminals T26 and T27, respectively.

Table 1 shows the specifications of the IGBTs and the diodes used in the full-bridge circuits F1 and F2 of the present embodiment. In Table 1, element characteristics of the full-bridge circuit F1 are compared with element characteristics of the full-bridge circuit F2. The specifications of each IGBT and each diode are not limited to the element characteristics described in Table 1.

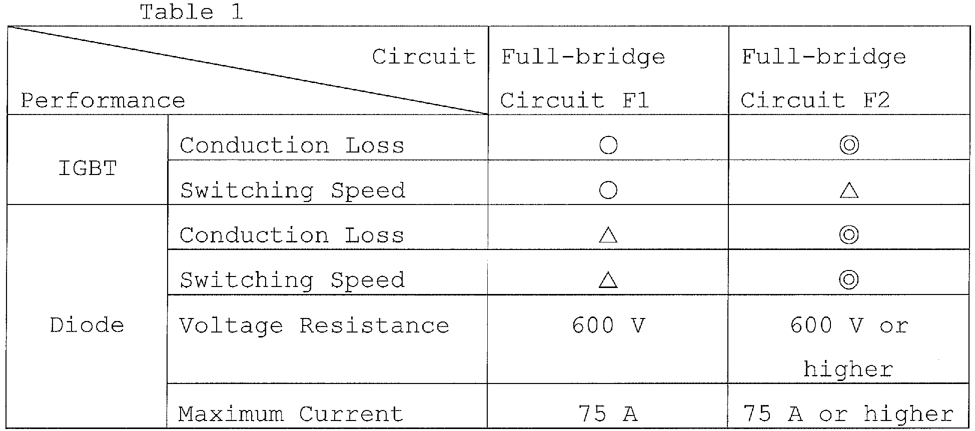

With regard to IGBT conduction loss, the IGBTs of the full-bridge circuit F2 have characteristics that are greater than or equal to the IGBTs of the full-bridge circuit F1. That is, the conduction loss of the IGBTs of the full-bridge circuit F2 is less than or equal to the conduction loss of the IGBTs of the full-bridge circuit F1. With regard to IGBT switching loss, the IGBTs of the full-bridge circuit F1 have characteristics that are greater than or equal to the IGBTs of the full-bridge circuit F2.

With regard to diode conduction loss, the diodes of the full-bridge circuit F2 have characteristics that are greater than or equal to the diodes of the full-bridge circuit F1. That is, the conduction loss of the diodes of the full-bridge circuit F2 is less than or equal to the conduction loss of the diodes of the full-bridge circuit F1. With regard to diode switching speed, the diodes of the full-bridge circuit F2 have characteristics that are greater than or equal to the diodes of the full-bridge circuit F1. With regard to diode voltage resistance and maximum current, the diodes of the full-bridge circuit F2 have characteristics that are greater than or equal to the diodes of the full-bridge circuit F1.

The terminals T15 and T18 of the full-bridge circuit F1 are connected to the terminals T25 and T28 of the full-bridge circuit F2, respectively. The terminals T25 and T28 are connected to terminals T01 and T02 of the inverter 10 (output terminals of inverter 10).

### [Application to Full-bridge Unit and Clamp]

Fig. 2 shows a power converter that uses the inverter 10.

The power converter of the present embodiment includes the full-bridge circuit F1, which functions as a full-bridge unit that converts DC voltage into AC voltage, and the full-bridge circuit F2, which functions as a clamp.

The positive electrode of a DC power supply G1 is connected to the terminal T11 of the full-bridge circuit F1, and the negative electrode of the DC power supply G1 is connected to the terminal T12 of the full-bridge circuit F1.

One end of a reactor RE1 is connected to the terminal T01 of the inverter 10, and one end of a reactor RE2 is connected to the terminal T02 of the inverter 10. A capacitor C1 is connected between the other end of the reactor RE1 and the other end of the reactor RE2. A load L1 is connected in parallel to the capacitor C1.

An ammeter 10 is connected in series to the other end of the reactor RE1, and a voltmeter V0 is connected between the other ends of the reactors RE1 and RE2.

The measurement results of the ammeter 10 and the voltmeter V0 are provided to a controller 31 that controls the switching elements Q11 to Q14 and Q21 to Q24.

Drivers 32 that output drive signals to the gates of the full-bridge circuits F1 and F2 are connected to the terminals T13, T14, T16, T17, T23, T24, T26, and T27. The drivers 32 are connected to the controller 31 in a drive circuit 30 to generate the drive signals that activate and deactivate the corresponding switching elements in accordance with control signals from the controller 31. Further, the drivers 32 respectively output the drive signals to the gates of the switching elements via the terminals T13, T14, T16, T17, T23, T24, T26, and T27.

### [Operation]

The controller 30 performs PWM control to cyclically activate and deactivate the switching elements Q11 and Q14, keep the switching elements Q21 and Q22 activated, and keep the switching elements Q12, Q13, Q23, and Q24 deactivated. This controls the output voltage supplied from the terminal T01 to have a positive semi-cyclic waveform and the output voltage from the terminal T02 to have a negative semi-cyclic waveform.

Further, the controller 30 performs PWM control to cyclically activate and deactivate the switching elements Q12 and Q13, keep the switching elements Q23 and Q24 activated, and keep the switching elements Q11, Q14, Q21, and Q22 deactivated. This controls the output voltage supplied from the terminal T01 to the load L1 to have a negative semi-cyclic waveform and the output voltage from the terminal T02 to have a positive semi-cyclic waveform.

The AC voltage between the terminals T01 and T02 has three values. Thus, as compared to when the AC voltage has two values, the amplitude (absolute value) of the AC voltage may be decreased as long as the output is the same output. Further, the switching losses of the switching elements Q11 to Q14 and the core losses of the reactors may be reduced, and the circuit power efficiency may be increased.

Part of the operation of the positive semi-cycle at the terminal T01 will now be described.

During a first period, the switching elements Q11 and Q14 are activated, the switching elements Q12 and Q13 are deactivated, the switching element Q21 is activated, and the switching element Q23 is deactivated. During the first period, current flows in a route in the order of the positive electrode of the DC power supply G1, the switching element Q11, the reactor RE1, the capacitor C1, the reactor RE2, the switching element Q14, and the negative electrode of the DC power supply G1. In the switching elements Q11 and Q14, current flows from the collector to the emitter. Thus, conduction losses occur at the switching elements Q11 and Q14. Current does not flow to the diodes D11 to D14. During the first period, the amplitude of the AC voltage is the voltage (V1) at the DC power supply G1.

During a second period, the switching elements Q11 and Q14 are deactivated. During the second period, which is a transition period, when the switching elements Q11 and Q14 are deactivated, the voltage between the collector and the emitter of the switching elements Q11 and Q14 changes from approximately 0 to V1/2. Further, the current flowing to the switching elements Q11 and Q14 changes to 0. Thus, switching losses occur in the switching elements Q11 and Q14 when deactivated. Further, since the energy stored in the reactors RE1 and RE2 is released, recirculation current starts to flow to the diode D21 and the switching element Q23.

During a third period, the switching elements Q11 and Q14 are kept deactivated. In this case, recirculation current flows to the diode D23 and the switching element Q21. Thus, a conduction loss occurs at the diode D23 and the switching element Q21.

During a fourth period, the switching elements Q11 and Q14 are activated. During the fourth period, which is a transition period, when the switching elements Q11 and Q14 are activated, the voltage between the collector and the emitter of the switching elements Q11 and Q14 changes from V1/2 to approximately 0, and current flows to the switching elements Q11 and Q14. Thus, switching losses occur in the switching elements Q11 and Q14 when activated. Since the diode D23 changes from forward bias to reverse bias, reverse recovery losses occur in the diode D23.

During a fifth period, the switching elements Q11 and Q14 are kept activated, and the same operations as the first period are performed.

Thus, the load L1 is controlled by the drive signals supplied from the drivers 32.

The above embodiment has the advantages described below.
(1) In the above embodiment, the inverter 10 includes the two full-bridge circuits F1 and F2. The full-bridge circuit F1 functions as a full-bridge unit, and the full-bridge circuit F2 functions as a clamp. This realizes an output clamp inverter with the same versatile full-bridge circuit module. This allows for use of common substrates and drive circuits and reduces the cost of the power conversion circuit. Further, the switching elements are all arranged in the module. This reduces characteristic variations and facilitates circuit designing. In addition, the wires on the substrate may be shortened to reduce a parasitic resistance and the influence of an inductor.
(2) In the above embodiment, with regard to IGBT conduction loss, the IGBTs of the full-bridge circuit F2 have characteristics that are greater than or equal to the IGBTs of the full-bridge circuit F1. Further, with regard to diode conduction loss, the diodes of the full-bridge circuit F2 have characteristics that are greater than or equal to the diodes of the full-bridge circuit F1. This reduces the conduction loss at the output stage (clamp) of the inverter 10.
(3) In the above embodiment, with regard to IGBT switching speed, the IGBTs of the full-bridge circuit F1 have characteristics that are greater than or equal to the IGBTs of the full-bridge circuit F2. With regard to diode switching speed, the diodes of the full-bridge circuit F2 have characteristics that are greater than or equal to the diode of the full-bridge circuit F1. Thus, in the inverter 10, orthogonal conversion including fewer transition periods is performed, and clamping is quickly performed in accordance with changes in the waveform.
(4) In the above embodiment, with regard to diode voltage resistance and the maximum current, the diodes of the full-bridge circuit F2 have characteristics that are greater than or equal to the diode of the full-bridge circuit F1. This allows the output stage (clamp) of the inverter 10 to be applicable to the voltage and current that are in accordance with the load.

The above embodiment may be modified as described below.

In the above embodiment, IGBTs are used as the switching elements Q11 to Q14 and Q21 to Q24. However, IGBTs do not have to be used as long as switching elements are used. For example, metal-oxide-semiconductor field-effect transistors (MOSFETs) may be used. The use of MOSFET easily increases switching frequencies and downsizes a reactor. Further, since a MOSFET parasitic diode can be used as the diode, the number of elements may be reduced.

In the above embodiment, the four switching elements Q11 to Q14 are used in the full-bridge circuit F1. However, the number of stages (the number of switching elements) is not limited in such a manner.

## Claims

1. An inverter circuit (10) comprising:
a first full-bridge circuit module (F1) configured to convert DC voltage into AC voltage; and
a second full-bridge circuit module (F2) configured to clamp an output of the first full-bridge circuit module (F1),
wherein output terminals (T15, T18) of the first full-bridge circuit module (F1) are connected in parallel to output terminals (T25, T28) of the second full-bridge circuit module (F2),
wherein the output terminals (T25, T28) of the second full-bridge circuit module (F2) are connected to output terminals (T01, T02) of the inverter circuit (10),
the inverter circuit (10) **characterized in that**
each of the first and second full-bridge circuit modules (F1; F2) includes the same number of switching elements (Q11-Q14; Q21-Q24) and corresponding rectifying elements (D11-D14; D21-D24),
a conduction loss of the switching elements (Q21-Q24) of the second full-bridge circuit module (F2) is less than or equal to a conduction loss of the switching elements (Q11-Q14) of the first full-bridge circuit module (F1),
a conduction loss of the rectifying elements (D21-D24) of the second full-bridge circuit module (F2) is less than or equal to a conduction loss of the rectifying elements (D11-D14) of the first full-bridge circuit module (F1),
a switching speed of the switching elements (Q11-Q14) of the first full-bridge circuit module (F1) is higher than or equal to a switching speed of the switching elements (Q21-Q24) of the second full-bridge circuit module (F2), and
a switching speed of the rectifying elements (D21-D24) of the second full-bridge circuit module (F2) is higher than or equal to a switching speed of the rectifying elements (D11-D14) of the first full-bridge circuit module (F1).

## Patentansprüche

1. Wechselrichterschaltung (10), aufweisend:
ein erstes Vollbrückenschaltungsmodul (F1), das dafür ausgelegt ist, Gleichspannung in Wechselspannung umzuwandeln; und
ein zweites Vollbrückenschaltungsmodul (F2), das dafür ausgelegt ist, an einen Ausgang des ersten Vollbrückenschaltungsmoduls (F1) geklemmt zu sein,
wobei Ausgangsanschlüsse (T15, T18) des ersten Vollbrückenschaltungsmoduls (F1) parallel mit Ausgangsanschlüssen (T25, T28) des zweiten Vollbrückenschaltungsmoduls (F2) verbunden sind,
wobei die Ausgangsanschlüsse (T25, T28) des zweiten Vollbrückenschaltungsmodul (F2) mit Ausgangsanschlüssen (T01, T02) der Wechselrichterschaltung (10) verbunden sind,
wobei die Wechselrichterschaltung (10) **dadurch gekennzeichnet ist, dass**
das erste und das zweite Vollbrückenschaltungsmodul (F1; F2) jeweils dieselbe Anzahl von Schaltelementen (Q11-Q14; Q21-Q24) und entsprechende Gleichrichtelemente (D11- D14; D21-D24) enthalten,
ein Leitungsverlust an den Schaltelementen (Q21-Q24) des zweiten Vollbrückenschaltungsmoduls (F2) kleiner oder gleich einem Leitungsverlust der Schaltelemente (Q11-Q14) an dem ersten Vollbrückenschaltungsmodul (F1) ist,
ein Leitungsverlust an den Gleichrichtelementen (D21-D24) des zweiten Vollbrückenschaltungsmoduls (F2) kleiner oder gleich einem Leitungsverlust an den Gleichrichtelementen (D11-D14) des ersten Vollbrückenschaltungsmoduls (F1) ist,
eine Schaltgeschwindigkeit der Schaltelemente (Q11-Q14) des ersten Vollbrückenschaltungsmoduls (F1) größer oder gleich einer Schaltgeschwindigkeit der Schaltelemente (Q21-Q24) des zweiten Vollbrückenschaltungsmoduls (F2) ist, und
eine Schaltgeschwindigkeit der Gleichrichtelemente (D21-D24) des zweiten Vollbrückenschaltungsmoduls (F2) größer oder gleich einer Schaltgeschwindigkeit der Gleichrichtelemente (D11- D14) des ersten Vollbrückenschaltungsmoduls (F1) ist.

## Revendications

1. Circuit onduleur (10) comprenant :
un premier module de circuit de pont double alternance (F1) configuré pour convertir une tension continue en une tension alternative ; et
un deuxième module de circuit de pont double alternance (F2) configuré pour écrêter une sortie du premier module de circuit de pont double alternance (F1),
dans lequel les bornes de sortie (T15, T18) du premier module de circuit de pont double alternance (F1) sont connectées en parallèle aux bornes de sortie (T25, T28) du deuxième module de circuit de pont double alternance (F2),
dans lequel les bornes de sortie (T25, T28) du deuxième module de circuit de pont double alternance (F2) sont connectées aux bornes de sortie (T01, T02) du circuit onduleur (10),
le circuit onduleur (10) étant **caractérisé en ce que**
chacun des premier et deuxième modules de circuit de pont double alternance (F1 ; F2) comprend le même nombre d'éléments de commutation (Q11 à Q14 ; Q21 à Q24) et d'éléments de redressement (D11 à D14 ; D21 à D24) correspondants,
une perte de conduction des éléments de commutation (Q21 à Q24) du deuxième module de circuit de pont double alternance (F2) est inférieure ou égale à une perte de conduction des éléments de commutation (Q11 à Q14) du premier module de circuit de pont double alternance (F1),
une perte de conduction des éléments de redressement (D21 à D24) du deuxième module de circuit de pont double alternance (F2) est inférieure ou égale à une perte de conduction des éléments de redressement (D11 à D14) du premier module de circuit de pont double alternance (F1),
une vitesse de commutation des éléments de commutation (Q11 à Q14) du premier module de circuit de pont double alternance (F1) est supérieure ou égale à une vitesse de commutation des éléments de commutation (Q21 à Q24) du deuxième module de circuit de pont double alternance (F2), et
une vitesse de commutation des éléments de redressement (D21 à D24) du deuxième module de circuit de pont double alternance (F2) est supérieure ou égale à une vitesse de commutation des éléments de redressement (D11 à D14) du premier module de circuit de pont double alternance (F1).
